# EUROPEAN PATENT SPECIFICATION

(11) **EP 2 711 099 B1**
(45) Date of publication and mention of the grant of the patent: **24.05.2017**
(21) Application number: 12777836.3
(22) Date of filing: 28.04.2012
(51) Int. Cl.: B25B 29/02, F16B 31/04, B21B 27/03

(54) **PRE-TIGHTENING LOCKING DEVICE FOR RETAINING PARTS ON SHAFT**
VORSPANNUNGSVERRIEGELUNGSVORRICHTUNG ZUM HALTEN VON TEILEN AUF EINER WELLE
DISPOSITIF DE VERROUILLAGE À PRÉSERRAGE POUR LA RETENUE DE PIÈCES SUR UNE TIGE

(30) Priority: 28.04.2011 CN 201110107442
(43) Date of publication of application: 26.03.2014
(73) Proprietor: Zhuzhou Cemented Carbide Group Corp. Ltd., Zhuzhou, Hunan 412009 (CN)
(72) Inventor: TU, Jiangang, Zhuzhou Hunan 412009 (CN); HE, Jun, Zhuzhou Hunan 412009 (CN); FAN, Ming, Zhuzhou Hunan 412009 (CN); XIE, Ying, Zhuzhou Hunan 412009 (CN); TANG, Zhijun, Zhuzhou Hunan 412009 (CN); ZHAO, Ronghui, Zhuzhou Hunan 412009 (CN); YAO, Manping, Zhuzhou Hunan 412009 (CN)
(74) Representative: Seppo Laine Oy
(86) International application number: PCT/CN2012/074938
(87) International publication number: WO 2012/146213

(56) References cited:
- CN-A- 102 205 347
- CN-Y- 2 768 914
- FR-A1- 2 790 798
- JP-A- 2001 314 906
- JP-A- 2002 153 904
- US-A- 4 182 215
- US-A- 4 841 612
- TU, JIANGANG ET AL.: 'The Optimum Structural Design of Cemented Carbide Composite Roll' CEMENTED CARBIDE. vol. 28, no. 6, December 2011, pages 385 - 386, XP008171902

## Description

### TECHNICAL FIELD

The present disclosure relates to a pre-tightening locking device for retaining a component on a shaft, which in particular is a cemented carbide roll. Besides, the present disclosure further relates to a process of assembling the cemented carbide roll using the pre-tightening locking device and the cemented carbide roll obtained through the process.

### TECHNICAL BACKGROUND

In the machinery industry, it is common to retain a plurality of components on a shaft. For example, in steel hot-rolling process, a variety of cemented carbide rolls are commonly used to improve the service life of the roll and the surface quality of the rolled material. A cemented carbide roll typically comprises a mother roll shaft with a boss and a plurality of alternately arranged cemented carbide roll rings and spacer rings which are mounted on the mother roll shaft and abut against the boss thereof, wherein the cemented carbide roll rings and spacer rings are fixedly retained on the mother roll shaft by a pre-tightening locking device.

It is known that a hydraulic nut can be utilized to achieve assembling cemented carbide rolls. The hydraulic nut can generate a large axial pre-tightening force so as to ensure that a fastened mechanism can effectively overcome axial creep and achieve stable fastening under the conditions of environmental fluctuations such as vibration, temperature change, impact, etc.

Chinese patent document CN 01240838.7 discloses a hydraulic nut apparatus comprising a pressure joint and a pressure exhaust joint. A sealing member which functions under pressure is provided between a boss of the hydraulic nut and a circumferential contact surface of a groove within the hydraulic nut. The hydraulic nut is characterized in a simple structure, easy manufacture, low cost, great thrust output, etc. Nevertheless, this apparatus needs measuring and supplementing pressure in use. Otherwise, it may come loose, and the instable fastening finally leads to failure of the fastening mechanism.

Chinese patent documents CN 02208899.7, CN 03226253.1 and CN 200520050660.9 all disclose hydraulic pre-tightening mechanisms, which have a common feature, i.e., when the hydraulic nut reaches a desirable pre-tightening force, a backing ring slightly smaller than a half ring, a locking ring or a wedge ring with an inclined plane, etc. are inserted between the hydraulic nut and the retained component so as to fill an interval between the hydraulic nut and the retained component, transfer pressure and maintain the pre-tightening force of the fastening mechanism after the pressure release of the hydraulic nut. The main advantage of the hydraulic pre-tightening mechanism of this structure is that the hydraulic nut does not need to work under pressure, which is good for safety and pre-tightening stability. However, there also exist defects. The hydraulic nut is not suitable for repeated use since the sealing member thereof is made of polymer materials which are easily subjected to aging under the influences of temperature, oil, gas, etc. In addition, high pressure resistant sealing member of this kind is highly demanding on materials, rendering great costs thereof. The French patent document FR 2 790 798 A1 discloses a tightening element with the features of the preamble of claim 1.

### SUMMARY OF THE INVENTION

To solve the above problems, the present disclosure aims to provide a pre-tightening locking device for retaining a component on a shaft, which can reliably pre-tighten and lock the component to be fitted on the shaft. Meanwhile, a hydraulic nut is not disposed under long-term influences from the working environment, so that a comparatively long service life thereof can be obtained. The invention is a pre-tightening locking device in accordance with claim 1 and a process in accordance with claim 12. According to a first aspect of the present disclosure, it discloses a pre-tightening locking device for retaining a component on a shaft, comprising: a backing ring having a first end face and an opposite second end face, wherein the backing ring is mounted on the shaft with the first end face thereof closely engaging with the component to be retained; a pre-tightening nut threadedly coupled on the shaft, wherein one end of the pre-tightening nut engages with the second end face of the backing ring; a hydraulic nut arranged outside of the pre-tightening nut through threads, wherein an annular piston of the hydraulic nut is capable of exerting an acting force on the backing ring under fluid pressure so as to form an interval between the backing ring and the pre-tightening nut; and a filling member for filling the interval. According to the present disclosure, in filling the interval formed under fluid pressure between the pre-tightening nut and the backing ring, the pre-tightening force can be maintained, and therefore the component on the shaft can be firmly retained. Under this condition, the hydraulic nut can be removed, so that the hydraulic does not have to be maintained on the shaft to participate in the operations of the shaft. That is, the hydraulic nut is only used in the pre-tightening locking process and would not be disposed under commonly hostile environment of the shaft in use, whereby the service life of the hydraulic nut is significantly prolonged.

According to a preferred embodiment of the present disclosure, the pre-tightening nut comprises an axial through hole and a power transmission member capable of moving inside the axial through hole. The power transmission member is longer than the axial through hole, and one end of the power transmission member engages with the annular piston and the other end thereof engages with the backing ring, so that the annular piston exerts the acting force on the backing ring through the power transmission member.

In one embodiment, an additional annular backing ring is further arranged between the annular piston and the power transmission member so as to achieve homogeneous power transmission.

In one embodiment, the first end face of the backing ring has a larger area than the second end face thereof. Preferably, the axial through hole is completely arranged inside of the second end surface of the backing ring. In one specific embodiment, the backing ring comprises a large end defining the first end face and a small end defining the second end face, thereby the backing ring being in a form of a T-shaped backing ring. On the periphery of the small end it is provided with a fastener for fixing the filling member to the backing ring, so that the pre-tightening force formed can be effectively maintained.

In one embodiment, the filling member includes a pair of half rings with the height thereof being equal to the width of the interval. Preferably, the half rings are composed of standard half rings with a certain width. In operation, the number of standard half rings can be properly selected according to the width of the formed intervals so as to adapt to the interval.

In an optional embodiment, the hydraulic nut is constructed in a form of a flange, under which condition the pre-tightening nut is accommodated in an inner cavity of the flange.

In another preferred embodiment according to the present disclosure, the pre-tightening nut comprises an axial threaded through hole and the filling member is a fastening screw, wherein the fastening screw threadedly engages with and is capable of passing through the axial threaded through hole so as to be fixed on the backing ring. The fastening screw can accurately fill the interval formed under fluid pressure between the pre-tightening nut and the backing ring, so that the selection of proper half rings (such as an assembly of a plurality of standard half rings) to fill the interval is no longer necessary and therefore the operation is simplified. At the same time, filling the interval with a fastening screw can also accurately maintain coaxiality between the mother roll shaft and the components on the shaft being pre-tightened and locked, so as to reduce radial runout of the components on the shaft.

In one embodiment, the hydraulic nut is shaped in a form of a hollow cylinder and the annular piston directly acts on the backing ring.

According to the present disclosure, the hydraulic nut can be removed after the component is retained to the shaft.

According to the present disclosure, preferably, the shaft is a mother roll shaft of a cemented carbide roll, and the component to be retained comprises alternately arranged cemented carbide roll rings and spacer rings which are retained to abut against a boss of the mother roll shaft.

According to a second aspect of the present disclosure, it discloses a process of retaining the component to the shaft using the pre-tightening locking device according to the first aspect of the disclosure, comprising: mounting the backing ring on the shaft with the first end face of the backing ring closely engaging with the component to be retained; threadedly coupling the pre-tightening nut on the shaft so as to engage one end of the shaft with the second end face of the backing ring; arranging the hydraulic nut outside of the pre-tightening nut through threads; injecting pressure fluid into the hydraulic nut and enabling the annular piston of the hydraulic nut to exert an acting force on the backing ring under the pressure of fluid, so that an interval is formed between the backing ring and the pre-tightening nut; filling the interval with the filling member; and releasing the fluid pressure and removing the hydraulic nut.

According to a third aspect of the present disclosure, it discloses a cemented carbide roll, comprising an cemented carbide roll ring and a spacer ring secured to a boss of a mother roll shaft through the process according to the second aspect of the present disclosure.

According to the present disclosure, filling the interval formed under fluid pressure between the pre-tightening nut and the backing ring can maintain the pre-tightening force and assure that the components on the shaft can be firmly retained. After that, the hydraulic nut and other corresponding components, such as a power transmission column and the backing ring, can be removed, so that the hydraulic nut will not be used in the rolling process of the cemented carbide roll. Therefore, the hydraulic nut and the sealing member therein would not be affected in a long time by disadvantageous factors in the working environment such as temperature, oil, vapor, etc., whereby the service life of the hydraulic nut is significantly improved. Meanwhile, the removable hydraulic nut and the power transmission column can be repeatedly used. In addition, the cemented carbide roll assembled with the pre-tightening locking device does not comprise the hydraulic nut, which significantly decreases costs and at the same time can still achieve reliable pre-tightening.

Tests have shown that according to the present disclosure, the cost of a cemented carbide roll can be reduced by 30% with the service life of the sealing member in the hydraulic nut being prolonged by over 5 times.

### BRIEF DESCRIPTION OF DRAWINGS

In the following, the embodiments according to the present disclosure will be described in detail with reference to the appended drawings. It should be noted that these drawings are merely used for better explaining the present disclosure instead of limiting the present disclosure in any manner.
Fig. 1 schematically shows the structure of the pre-tightening locking device according to a first embodiment of the present invention;
Fig. 2 schematically shows a process for assembling the cemented carbide roll using the pre-tightening locking device as shown in Fig. 1;
Fig. 3 schematically shows the cemented carbide roll assembled by the pre-tightening locking device as shown in Fig. 1;
Fig. 4 schematically shows the structure of the pre-tightening locking device according to a second embodiment of the present invention;
Fig. 5 schematically shows a process for assembling the cemented carbide roll using the pre-tightening locking device as shown in Fig. 4; and
Fig. 6 schematically shows the cemented carbide roll assembled by the pre-tightening locking device as shown in Fig. 4.

### DETAILED DESCRIPTION OF EMBODIMENTS

For the sake of convenience, in the following, a cemented carbide roll will be taken as an example to explain the present disclosure. However, one skilled in the art can understand that the present disclosure can also be used in the pre-tightening and locking processes of other components on a shaft.

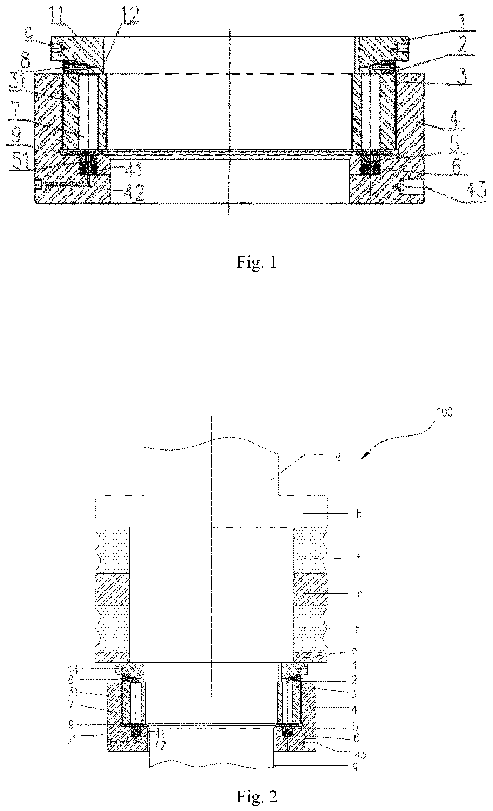

As shown in Fig. 2, a cemented carbide roll usually comprises a mother roll shaft g with a boss h. Alternatively arranged cemented carbide roll rings f and spacer rings e are mounted on the mother roll shaft g and closely abut against a boss h of the mother roll shaft. It can be easily understood that although Fig. 2 indicates two groups of cemented carbide roll rings f and spacer rings e, the numbers thereof can also vary appropriately according to specific conditions.

To begin with, a first embodiment according to the present disclosure will be explained with reference to Fig. 1 to Fig. 3.

As shown in Fig. 1, a pre-tightening locking device 100 according to the first embodiment of the present disclosure comprises a backing ring 1 mounted on the mother roll shaft g and closely engaging with a component to be retained, i.e., one of the cemented carbide roll ring f and the spacer ring e (indicated as the spacer ring e in the first embodiment as shown in Fig. 2), by a first end face 11 of the mother roll shaft g.

The pre-tightening locking device 100 further comprises a pre-tightening nut 3, an inner and outer surface of which are both provided with threads. The pre-tightening nut 3 is threadedly coupled by its inner threads on the mother roll shaft g, with one end thereof (the upper end in the drawing) exerting a force on a second end face 12 of a backing ring 1 which is opposite to the first end face 11 thereof.

The pre-tightening locking device 100 also comprises a hydraulic nut 4. In the embodiment, the hydraulic nut 4 is shaped in a form of a flange, an inner cavity of which is provided with inner threads that can be engaged with the outer threads of the pre-tightening nut 3, so that the pre-tightening nut 3 is accommodated in an inner cavity of the flange. The hydraulic nut 4 comprises a cylinder block 41 arranged on a floor surface of the inner cavity, an annular piston 5 arranged in the cylinder block 41, a sealing ring 6 arranged between the annular piston 5 and the cylinder block 41, and a fluid passage 42 in communication with the annular piston 5. The structure and function of the hydraulic nut are well known by one skilled in the art and therefore will not be further explained here.

In the first embodiment, the pre-tightening nut 3 comprises a plurality of circumferentially and homogeneously arranged axial through holes 31. Each of the axial through holes 31 is provided with a power transmission member which preferably is a shaft-shaped power transmission column 7 capable of moving inside the axial through hole 31. The power transmission column 7 is longer than the axial through hole 31, such that one end of the power transmission column 7 connects to the second end face 12 of the backing ring 1 and the other end thereof connects to the annular piston 5.

In addition, the pre-tightening locking device 100 also comprises a filling member, the function of which will be described in detail in the following. In the first embodiment, the filling member is a pair of half rings 2 of a certain height.

Fig. 2 schematically shows a process for assembling a cemented carbide roll using the pre-tightening locking device 100. First, the mother roll shaft g is vertically disposed with a boss h at a lower side (i.e., in a state of being rotated 180 degrees with respect to that shown in Fig. 2), and is fixed on a support which is not shown in the drawing. Then, a first cemented carbide roll ring f, a first spacer ring e, a second cemented carbide roll ring f, a second spacer ring e and the backing ring 1 are successively arranged, so that the first cemented carbide roll ring f abuts to the boss h and the first end face 11 of the backing ring 1 abuts to the second spacer ring e. Subsequently, the pre-tightening nut 3 is screwed on the mother roll shaft g so as to enable one end thereof abuts against the second end face of the backing ring 1. After that, the mother roll shaft is rotated 180 degrees so that the boss h is at an upper side, i.e., the mother roll shaft g is in a state as shown in Fig. 2, followed by inserting the power transmission column 7 into the axial through hole 31 of the pre-tightening nut 3. Finally, the hydraulic nut 4 is screwed to the pre-tightening nut 3, preferably to such an extent that the annular piston 5 just touches the power transmission column 7.

In operation, the annular piston 5 in the cylinder block 41 is pressed through the fluid passage 42. At this time, the annular piston 5 axially moves under the pressure so as to jack the power transmission column 7, which transfers the pressure to the backing ring 1. Under this condition, the backing ring 1 produces axial displacement, which first eliminates the axial interval between the cemented carbide roll ring f and the spacer ring e. Then, as the pressure continuously increases, the shaft mechanism is forced to be elastically deformed, such as the spacer ring being compressed, the shaft being stretched, the threads being deformed, etc., so as to generate a pre-tightening force. At this time, a certain interval is formed between the backing ring 1 and the pre-tightening nut 3.

When the oil pressure in the hydraulic nut 4 reaches a predetermined value, the half rings 2 are plugged into the interval between the backing ring 1 and the pre-tightening nut 3, wherein the height of the half rings 2 is selected as substantially being equal to the width of the interval, and the half rings 2 are fixed to the backing ring 1 through a fastener. After that, the oil pressure in the hydraulic nut 4 is released, so that the backing ring 1 closely abuts to the pre-tightening nut 3 through the half rings 2, and the pre-tightening force is maintained.

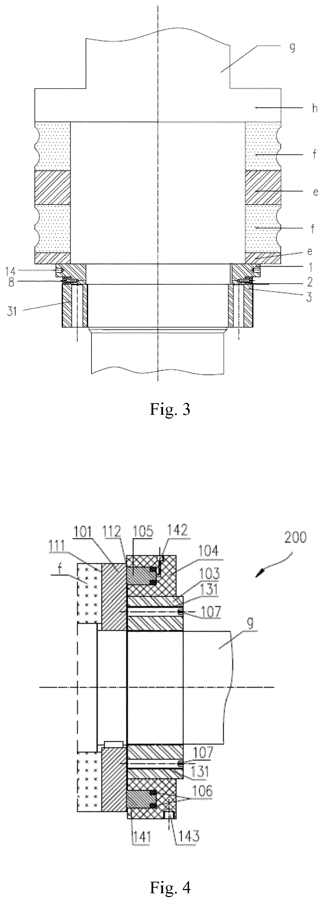

Subsequently, proper means, such as a crowbar, can be inserted into a detaching hole 43 on the periphery of the hydraulic nut 4 to remove the hydraulic nut 4 and take out the power transmission column 7. Up till now, the cemented carbide roll is formed, as shown in Fig. 3. At this time, the cemented carbide roll can be further assembled before use.

In the pre-tightening locking device according to the first embodiment of the present disclosure, the hydraulic nut can be removed after the assembly is completed, so that the hydraulic nut would not be engaged in the rolling process with the cemented carbide roll. This being the case, the hydraulic nut with the sealing member therein would not be affected for long by disadvantageous factors in the working environment, such as temperature, oil, vapor, etc., whereby the service life of the hydraulic nut is significantly improved. Meanwhile, the removable hydraulic nut and the power transmission column can both be repeatedly used. In addition, the cemented carbide roll assembled with the pre-tightening locking device does not comprise a hydraulic nut, which significantly decreases costs thereof with a reliable pre-tightening locking device still being obtained.

When the cemented carbide roll ring needs to be replaced, the power transmission column 7 and the hydraulic nut 4 are successively assembled as described above. Pressure fluid is fed into the hydraulic nut 4, and the backing ring 1 is jacked by the annular piston 5 and the power transmission column 7, so that the half rings 2 and the pre-tightening nut 3 are separated from each other. At this time, the fastener can be loosened for taking out the half rings 2 before releasing the pressure to remove the pre-tightening force. As a result, the pre-tightening nut 3, the backing ring 1, the cemented carbide roll f and the spacer ring 4 can be successively removed.

According to a preferred embodiment, an additional annular backing ring 9 is provided between the annular piston 5 and the power transmission column 7, so that the acting force of the annular piston can be homogeneously transferred, whereby the annular piston 5 is avoided from being deformed. Meanwhile, when the hydraulic nut 4 is released by being rotated, the power transmission column 7 can be prevented from getting stuck between the annular piston 5 and the pre-tightening nut 3, which would otherwise render the hydraulic nut 4 incapable of being rotated. It can be easily understood that, after the hydraulic nut is removed, the annular backing ring 9 can also be removed from the shaft for repeated use.

According to another preferred embodiment, the first end face 11 of the backing ring 1 engaging with the component to be retained has a larger area than the second end face 12 engaging with the pre-tightening nut 3, so that the axial acting force can be better transferred. Moreover, the axial through hole 31 of the pre-tightening nut 3 is arranged in such a way that the axial through hole 31 is completely contained inside the second end face 12 of the backing ring 1 viewed from the axial direction. This arrangement can further facilitate homogeneous transmission of the acting force from the annular piston.

As indicated in Fig. 1 and Fig. 2, the backing ring 1 comprises a large end defining the first end face 11 and a small end defining the second end face 12, i.e., the backing ring 1 takes on a T shape. On the periphery of the small end it is provided with a fastener which is indicated by a bolt 8 in the embodiment shown in the drawing for fixing the half rings 2 to the backing ring 1.

It can be easily understood that the half rings 2 can comprise a group of standard half rings with a standard width. In actual operations, a proper number of standard half rings are selected according to the actual size of the interval formed, so that the standard half rings can be plugged into the intervals. Furthermore, it can be easily understood, besides arranging the uninstalling hole 43 on the periphery of the hydraulic nut 4, peripheries of the annular piston and the backing ring can optionally be arranged with an annular piston detaching hole (not shown in the drawing) and a backing ring detaching hole 14, respectively, so as to facilitate assembling and removing of the annular piston.

In the following, a second embodiment of the present disclosure will be explained in detail with reference to Fig. 4 to Fig. 6. It should be noted that for the sake of simplicity, only structures and functions respectively different from those explained in the first embodiment will be illustrated in the following, while structures and functions the same as those explained in the first embodiment will not be repeated.

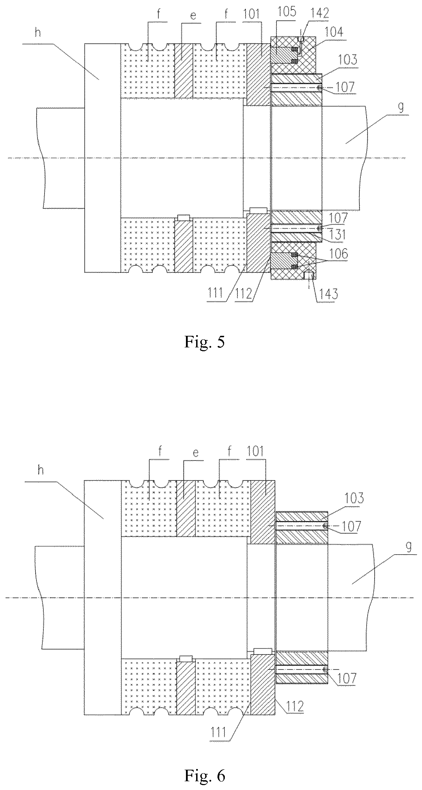

As indicated in Fig. 4 to Fig. 6, a pre-tightening locking device 200 according to the second embodiment of the present disclosure comprises: a backing ring 101, a first end face 111 of which closely engages with a component (a roll ring f as in the present embodiment) to be retained (see Fig. 5); and a pre-tightening nut 103, an inner surface and an outer surface thereof being provided with threads. An inner side of the pre-tightening nut 103 is threadedly coupled with a mother roll shaft g, wherein one end of the pre-tightening nut 103 (the left side in Fig. 4) acts on a second end face 112 of the backing ring 101.

The pre-tightening locking device 200 further comprises a hydraulic nut 104. In the second embodiment, the hydraulic nut 104 is shaped in a form of a hollow cylinder, which is threadedly coupled to the outside of the pre-tightening nut 103. The annular piston 105 of the hydraulic nut 104 exerts a force on the second end face 112 of the backing ring 101 at a position radially outside of the pre-tightening nut 103.

In the second embodiment, the pre-tightening nut 103 comprises a plurality of axial threaded through holes 131 homogeneously distributed along the circumferential direction. Each of the plurality of threaded through holes 131 is provided with a fastening screw 107 therein, which is threaded inside of the threaded through hole 131 and can move axially therein.

Fig. 5 illustrates a process of assembling a cemented carbide roll using the pre-tightening locking device 200. First, the mother roll shaft g is vertically disposed with a boss h at a lower side (i.e., in a state of being rotated 90 degrees counterclockwise with respect of Fig. 5) and is fixed on a support which is not shown in the drawing. Then, a first cemented carbide roll ring f, a spacer ring e, a second carbide alloy roll ring f and a backing ring 1 are successively placed, so that the first cemented carbide roll ring f abuts to the boss h and a first end face 111 of the backing ring 101 abuts to the second cemented carbide roll ring f. Subsequently, the pre-tightening nut 103 is screwed on a mother roll shaft g, so that one end thereof abuts to a second end face 112 of the backing ring 101. After that, the mother roll shaft g is rotated 90 degrees so as to be in a state as shown in Fig. 5. Finally, the hydraulic nut 104 is screwed on the pre-tightening nut 103, preferably to such an extent that the annular piston 105 just touches the second end face 112 of the backing ring 101.

In operation, the annular piston 105 in a cylinder block 141 is pressed through a fluid passage 142. At this time, the annular piston 105 axially moves under the pressure so as to transfer the pressure to the backing ring 101. Under this condition, the backing ring 101 produces axial displacement, which first eliminates the axial interval between the cemented carbide roll ring f and the spacer ring e. Then, as the pressure continuously increases, the shaft mechanism is forced to be elastically deformed, such as the spacer ring being compressed, the shaft being stretched, the threads being deformed, etc., so as to produce a pre-tightening force. At this time, a certain interval is formed between the backing ring 101 and the pre-tightening nut 103.

When the oil pressure in the hydraulic nut 104 reaches a predetermined value, the fastening screw 107 is screwed into the threaded through hole 131 and then adjusted to allow a front end of the fastening screw 107 extending outside the threaded through hole 131 to engage with the second end face 112 of the backing ring 101, so that the interval formed between the backing ring 101 and the pre-tightening nut 103 is filled. After that, the oil pressure in the hydraulic nut 104 can be released. At this time, the backing ring 101 closely abuts against the fastening screw 107 through the pre-tightening nut 103, whereby the pre-tightening force is maintained.

Subsequently, proper means, such as a crowbar, can be inserted into a detaching hole 143 on the periphery of the hydraulic nut 104 to remove the hydraulic nut 104. Up till now, the cemented carbide roll is completely formed, as shown in Fig. 6. At this time, the cemented carbide roll can be further assembled before use.

As is similar with the case in the first embodiment, in the pre-tightening locking device according to the second embodiment of the present disclosure, the hydraulic nut can be removed after assembly, so that the hydraulic nut would not be engaged in the rolling process with the cemented carbide roll. In this case, the hydraulic nut with the sealing member therein would not be affected for long by disadvantageous factors in the working environment, such as temperature, oil, vapor, etc., whereby the service life of the hydraulic nut is significantly improved. Meanwhile, the removable hydraulic nut can be repeatedly used. In addition, the cemented carbide roll assembled with the pre-tightening locking device does not comprise a hydraulic nut, which significantly decreases the cost thereof with a reliable pre-tightening locking device still capable of being obtained.

In addition, by adopting the fastening screw 107 to fill the interval between the backing ring 101 and the pre-tightening nut 103, the interval can be accurately filled, so that it is unnecessary to select half rings (such as a plurality of standard half rings) with a proper height to adapt to the interval, whereby the operation is simplified. Meanwhile, in filling the interval with the fastening screw 107, the coaxiality between the mother roll shaft and the components thereon can be accurately maintained, thus reducing runout of the components on the shaft. Moreover, this structure is simple and can be easily produced.

When the cemented carbide roll ring needs to be replaced, only the hydraulic nut 104 is necessary to be screwed into the pre-tightening nut 103. After that, pressure fluid is fed into the hydraulic nut 4 and the backing ring 101 is jacked by the annular piston 105, so that the fastening screw 107 and the pre-tightening nut 3 are separated from each other. At this time, the fastening screw 107 can be loosened before releasing the pressure to remove the pre-tightening force. As a result, the pre-tightening nut 103, the backing ring 101, the cemented carbide roll f and the spacer ring 4 can be successively removed.

In a preferred embodiment, the fastening screw 107 is a hexagon socket set screw with flat ends, so that the fastening screw 107 can be simply and quickly operated. The length of the hexagon socket set screw can be selected as approximately the same as the length of the axial threaded through hole 131.

Generally, a plurality of fastening screws 107 are circumferentially arranged. In a preferred embodiment, a dynamometer wrench can be adopted to screw the fastening screws 107 in the threaded through hole 131, so that each fastening screw 107 is exerted with a constant force and the interval is accurately filled.

According to the present disclosure, the pre-tightening nut, the hydraulic nut, the annular backing ring, the backing ring, the annular piston, the half ring, etc. can be made of high-strength steel, especially high-strength alloy steel. In one embodiment, the pre-tightening nut, the hydraulic nut and the annular backing ring can for example be made of 35CrMnSiA, and the backing ring, the annular piston and the half annular ring for example can be made of 42CrMo, and the power transmission column can be made of high compressive strength material, in particular cemented carbide such as grade YL10.2, etc.

Although this disclosure has been discussed with reference to preferable embodiments, it extends beyond the specifically disclosed embodiments to other alternative embodiments and/or use of the disclosure and obvious modifications and equivalents thereof. Particularly, as long as there are no structural conflicts, the technical features disclosed in each and every embodiment of the present disclosure can be combined with one another in any way. The scope of the present disclosure herein disclosed should not be limited by the particular disclosed embodiments as described above, but encompasses any and all technical solutions following within the scope of the following claims.

## Claims

1. A pre-tightening locking device (100) for retaining a component on a shaft (g), comprising:
a backing ring (1,101) having a first end face (11,111) and an opposite second end face (12,112), wherein the backing ring is configured to be mounted on the shaft so as to closely engage the first end face of the backing ring with the component to be retained;
a pre-tightening nut (3,103), which is configured to be threadedly coupled on the shaft, wherein one end of the pre-tightening nut engages with the second end face of the backing ring;
**characterized by** a hydraulic nut (4,104) arranged outside of the pre-tightening nut through threads, wherein an annular piston (5,105) of the hydraulic nut is capable of exerting an acting force on the backing ring under fluid pressure so as to form an interval between the backing ring and the pre-tightening nut; and
a filling member (2,107) for filling the interval.

2. The pre-tightening locking device according to claim 1, **characterized in that** the pre-tightening nut (3) comprises an axial through hole (31) and a power transmission member (7) capable of moving inside the axial through hole, wherein the power transmission member is longer than the axial through hole and one end of the power transmission member engages with the annular piston (5) and the other end thereof engages with the backing ring (1), so that the annular piston exerts the acting force on the backing ring through the power transmission member.

3. The pre-tightening locking device according to claim 2, **characterized in that** an additional annular backing ring (9) is further arranged between the annular piston and the power transmission member.

4. The pre-tightening locking device according to claim 2, **characterized in that** the first end face (11) of the backing ring (1) has a larger area than the second end face (12) thereof, and the axial through hole (31) is completely arranged inside the second end surface of the backing ring.

5. The pre-tightening locking device according to claim 4, **characterized in that** the backing ring (1) comprises a large end defining the first end face (11) and a small end defining the second end face (12), on a periphery of the small end there being provided with a fastener (8) for fixing the filling member to the backing ring.

6. The pre-tightening locking device according to any one of claims 1 to 5, **characterized in that** the filling member (2) includes a pair of half rings with the height thereof being equal to the width of the interval.

7. The pre-tightening locking device according to any one of claims 1 to 5, **characterized in that** the hydraulic nut (4) is constructed in a form of a flange and the pre-tightening nut is accommodated in an inner cavity of the flange.

8. The pre-tightening locking device according to claim 1, **characterized in that** the pre-tightening nut (103) comprises an axial threaded through hole (131) and the filling member is a fastening screw (107), wherein the fastening screw threadedly engages with and is capable of passing through the axial threaded through hole so as to be fixed on the backing ring.

9. The pre-tightening locking device according to claim 8, **characterized in that** the hydraulic nut (104) is shaped in a form of a hollow cylinder and the annular piston (105) directly acts on the backing ring.

10. The pre-tightening locking device according to any one of claims 1 to 9, **characterized in that** the hydraulic nut (4,104) is removed after the component is retained on the shaft.

11. The pre-tightening locking device according to any one of claims 1 to 10, **characterized in that** the shaft (g) is a mother roll shaft of a cemented carbide roll, wherein the component which abuts to a boss (h) of the mother roll shaft comprises alternately arranged cemented carbide roll rings (f) and spacer rings (e).

12. A process of retaining a component on a shaft using the pre-tightening locking device according to any one of claims 1 to 11, comprising:
mounting the backing ring (1,101) on the shaft with the first end face (11,111) of the backing ring closely engaging with the component to be retained;
threading the pre-tightening nut (3,103) on the shaft so as to engage one end of the shaft with the second end face (12,112) of the backing ring;
arranging the hydraulic nut (4,104) outside of the pre-tightening nut through threads;
injecting pressure fluid into the hydraulic nut and enabling the annular piston (5,105) of the hydraulic nut to exert an acting force on the backing ring under the pressure of fluid, so that a interval is formed between the backing ring and the pre-tightening nut;
filling the interval with the filling member (2,107); and
releasing the fluid pressure and removing the hydraulic nut.

13. A cemented carbide roll, comprising a cemented carbide roll ring (f) and a spacer ring (e) secured to a boss (h) of a mother roll shaft through the process according to claim 12.

## Patentansprüche

1. Vorspannende Arretiervorrichtung (100) zum Fixieren einer Komponente an einer Welle (g), Folgendes umfassend:
einen Haltering (1, 101) mit einer ersten Endfläche (11, 111) und einer gegenüberliegenden zweiten Endfläche (12, 112), wobei der Haltering dafür gestaltet ist, derart an die Welle montiert zu werden, dass die erste Endfläche des Halterings in engen Eingriff mit der zu fixierenden Komponente gelangt,
eine vorspannende Mutter (3, 103), die dafür gestaltet ist, mittels Gewinde mit der Welle gekoppelt zu werden, wobei ein Ende der vorspannenden Mutter in Eingriff mit der zweiten Endfläche des Halterings gelangt,
**gekennzeichnet durch** eine Hydraulikmutter (4, 104), die mittels Gewinde außerhalb der vorspannenden Mutter angeordnet ist, wobei ein Ringkolben (5, 105) der Hydraulikmutter in der Lage ist, unter Fluiddruck eine auf den Haltering wirkende Kraft auszuüben, so dass zwischen dem Haltering und der vorspannenden Mutter ein Zwischenraum gebildet ist, und
ein Füllelement (2, 107) zum Füllen des Zwischenraumes.

2. Vorspannende Arretiervorrichtung nach Anspruch 1, **dadurch gekennzeichnet, dass** die vorspannende Mutter (3) eine axiale Durchgangsöffnung (31) und ein Kraftübertragungselement (7) umfasst, das in der Lage ist, sich im Inneren der axialen Durchgangsöffnung zu bewegen, wobei das Kraftübertragungselement länger als die axiale Durchgangsöffnung ist und ein Ende des Kraftübertragungselements mit dem Ringkolben (5) und das andere Ende mit dem Haltering (1) in Eingriff gelangt, so dass der Ringkolben die auf den Haltering wirkende Kraft über das Kraftübertragungselement ausübt.

3. Vorspannende Arretiervorrichtung nach Anspruch 2, **dadurch gekennzeichnet, dass** ferner ein zusätzlicher ringförmiger Haltering (9) zwischen dem Ringkolben und dem Kraftübertragungselement angeordnet ist.

4. Vorspannende Arretiervorrichtung nach Anspruch 2, **dadurch gekennzeichnet, dass** die erste Endfläche (11) des Halterings (1) einer größere Grundfläche aufweist als dessen zweite Endfläche (12) und die axiale Durchgangsöffnung (31) vollständig innerhalb der zweiten Endfläche des Halterings angeordnet ist.

5. Vorspannende Arretiervorrichtung nach Anspruch 4, **dadurch gekennzeichnet, dass** der Haltering (1) ein großes Ende umfasst, welches die erste Endfläche (11) definiert, und ein kleines Ende, welches die zweite Endfläche (12) definiert, wobei am Umfang des kleinen Endes ein Befestigungselement (8) zum Befestigen des Füllelements am Haltering bereitgestellt ist.

6. Vorspannende Arretiervorrichtung nach einem der Ansprüche 1 bis 5, **dadurch gekennzeichnet, dass** das Füllelement (2) ein Paar Halbringe beinhaltet, deren Höhe gleich der Weite des Zwischenraumes ist.

7. Vorspannende Arretiervorrichtung nach einem der Ansprüche 1 bis 5, **dadurch gekennzeichnet, dass** die Hydraulikmutter (4) in Form eines Flansches konstruiert ist und die vorspannende Mutter in einer Innenaussparung des Flansches untergebracht ist.

8. Vorspannende Arretiervorrichtung nach Anspruch 1, **dadurch gekennzeichnet, dass** die vorspannende Mutter (103) eine axiale, mit Gewinde versehene Durchgangsöffnung (131) umfasst und das Füllelement eine Befestigungsschraube (107) ist, wobei die Befestigungsschraube dazu geeignet ist durch die axiale, mit Gewinde versehene Durchgangsöffnung zu verlaufen und mit ihr in Eingriff zu gelangen, so dass sie am Haltering befestigt ist.

9. Vorspannende Arretiervorrichtung nach Anspruch 8, **dadurch gekennzeichnet, dass** die Hydraulikmutter (104) in Form eines Hohlzylinders gebildet ist und der Ringkolben (105) direkt auf den Haltering wirkt.

10. Vorspannende Arretiervorrichtung nach einem der Ansprüche 1 bis 9, **dadurch gekennzeichnet, dass** die Hydraulikmutter (4, 104) entfernt wird, nachdem die Komponente an der Welle fixiert ist.

11. Vorspannende Arretiervorrichtung nach einem der Ansprüche 1 bis 10, **dadurch gekennzeichnet, dass** die Welle (g) die Welle einer Mutterwalze einer Hartmetallwalze ist, wobei die Komponente, die an eine Nabe (h) der Welle der Mutterwalze anstößt, abwechselnd angeordnete Hartmetallwalzenringe (f) und Abstandshalterringe (e) umfasst.

12. Verfahren zum Fixieren einer Komponente an einer Welle mit Hilfe der vorspannenden Arretiervorrichtung nach einem der Ansprüche 1 bis 11, Folgendes umfassend:
Montieren des Halteringes (1, 101) auf der Welle, wobei die erste Endfläche (11, 111) des Halterings in engen Eingriff mit der zu fixierenden Komponente gelangt, Schrauben der vorspannenden Mutter (3, 103) auf die Welle derart, dass ein Ende der Welle mit der zweiten Endfläche (12, 112) des Halterings in Eingriff gelangt,
Anordnen der Hydraulikmutter (4, 104) außerhalb der vorspannenden Mutter mittels Gewinde,
Einspritzen von Druckfluid in die Hydraulikmutter und Ermöglichen, dass der Ringkolben (5, 105) der Hydraulikmutter unter dem Druck des Fluids eine auf den Haltering wirkende Kraft ausübt, so dass zwischen dem Haltering und der vorspannenden Mutter ein Zwischenraum gebildet wird,
Füllen des Zwischenraumes mit dem Füllelement (2, 107) und
Ablassen des Fluiddrucks und Entfernen der Hydraulikmutter.

13. Hartmetallwalze, umfassend einen Hartmetallwalzenring (f) und einen Abstandshalterring (e), die durch das Verfahren nach Anspruch 12 an einer Nabe (h) einer Welle einer Mutterwalze befestigt werden.

## Revendications

1. Dispositif de verrouillage à pré-serrage (100) pour retenir un composant sur un arbre (g), comprenant :
une bague de support (1, 101) ayant une première face d'extrémité (11, 111) et
une seconde face d'extrémité opposée (12, 112), dans lequel la bague de support est configurée pour être montée sur l'arbre afin de mettre en prise de manière serrée la première face d'extrémité de la bague de support avec le composant à retenir ;
un écrou de pré-serrage (3, 103), qui est configuré pour être couplé par vissage sur l'arbre, dans lequel une extrémité de l'écrou de pré-serrage vient en prise avec la seconde face d'extrémité de la bague de support ;
**caractérisé par** un écrou hydraulique (4, 104) disposé à l'extérieur de l'écrou de pré-serrage à travers des filets,
dans lequel un piston annulaire (5, 105) de l'écrou hydraulique est capable d'exercer une force active sur la bague de support sous une pression de fluide de façon à former un intervalle entre la bague de support et l'écrou de pré-serrage ; et
un élément de remplissage (2, 107) pour remplir l'intervalle.

2. Dispositif de verrouillage à pré-serrage selon la revendication 1, **caractérisé en ce que** l'écrou de pré-serrage (3) comprend un trou traversant axial (31) et un élément de transmission de puissance (7) capable de se déplacer à l'intérieur du trou traversant axial, dans lequel l'élément de transmission de puissance est plus long que le trou traversant axial et une extrémité de l'élément de transmission de puissance vient en prise avec le piston annulaire (5), et son autre extrémité vient en prise avec la bague de support (1),
de sorte que le piston annulaire exerce la force active sur la bague de support à travers l'élément de transmission de puissance.

3. Dispositif de verrouillage à pré-serrage selon la revendication 2, **caractérisé en ce qu'**une bague de support annulaire supplémentaire (9) est en outre disposée entre le piston annulaire et l'élément de transmission de puissance.

4. Dispositif de verrouillage à pré-serrage selon la revendication 2, **caractérisé en ce que** la première face d'extrémité (11) de la bague de support (1) a une surface plus grande que la seconde face d'extrémité (12) de celle-ci,
et le trou traversant axial (31) est disposé complètement à l'intérieur de la seconde surface d'extrémité de la bague de support.

5. Dispositif de verrouillage à pré-serrage selon la revendication 4, **caractérisé en ce que** la bague de support (1) comprend une grande extrémité définissant la première face d'extrémité (11) et une petite extrémité définissant la seconde face d'extrémité (12),
une périphérie de la petite extrémité étant munie d'une fixation (8) pour fixer l'élément de remplissage sur la bague de support.

6. Dispositif de verrouillage à pré-serrage selon l'une quelconque des revendications 1 à 5, **caractérisé en ce que** l'élément de remplissage (2) comprend une paire de demi-bagues dont la hauteur est égale à la largeur de l'intervalle.

7. Dispositif de verrouillage à pré-serrage selon l'une quelconque des revendications 1 à 5, **caractérisé en ce que** l'écrou hydraulique (4) est réalisé sous la forme d'une bride et l'écrou de pré-serrage est logé dans une cavité intérieure de la bride.

8. Dispositif de verrouillage à pré-serrage selon la revendication 1, **caractérisé en ce que** l'écrou de pré-serrage (103) comprend un trou traversant axial fileté (131) et l'élément de remplissage est une vis de fixation (107),
dans lequel la vis de fixation vient en prise de manière vissée avec et est capable de traverser le trou traversant fileté axial pour être fixée sur la bague de support.

9. Dispositif de verrouillage à pré-serrage selon la revendication 8, **caractérisé en ce que** l'écrou hydraulique (104) est réalisé sous la forme d'un cylindre creux, et le piston annulaire (105) agit directement sur la bague de support.

10. Dispositif de verrouillage à pré-serrage selon l'une quelconque des revendications 1 à 9, **caractérisé en ce que** l'écrou hydraulique (4, 104) est retiré après que le composant soit retenu sur l'arbre.

11. Dispositif de verrouillage à pré-serrage selon l'une quelconque des revendications 1 à 10, **caractérisé en ce que** l'arbre (g) est un arbre de cylindre-mère d'un cylindre de carbure cémenté, dans lequel le composant qui vient en butée contre un bossage (h) de l'arbre de cylindre-mère comprend des bagues de cylindre de carbure cémenté (f) et des bagues d'espacement (e) disposées alternativement.

12. Procédé pour retenir un composant sur un arbre à l'aide du dispositif de verrouillage à pré-serrage selon l'une quelconque des revendications 1 à 11, comprenant les étapes consistant à :
monter la bague de support (1, 101) sur l'arbre, avec la première face d'extrémité (11, 111) de la bague de support venant en prise de manière serrée avec le composant à retenir ;
enfiler l'écrou de pré-serrage (3, 103) sur l'arbre de façon à mettre en prise une extrémité de l'arbre avec la seconde face d'extrémité (12, 112) de la bague de support ;
agencer l'écrou hydraulique (4, 104) à l'extérieur de l'écrou de pré-serrage à travers des filets ;
injecter du fluide sous pression dans l'écrou hydraulique et permettre au piston annulaire (5, 105) de l'écrou hydraulique d'exercer une force active sur la bague de support sous la pression de fluide, de sorte qu'un intervalle est formé entre la bague de support et l'écrou de pré-serrage ;
remplir l'intervalle avec l'élément de remplissage (2, 107) ; et
libérer la pression de fluide et enlever l'écrou hydraulique.

13. Cylindre de carbure cémenté, comprenant une bague de cylindre de carbure cémenté (f) et une bague d'espacement (e) fixées à un bossage (h) d'un arbre de cylindre-mère par le procédé selon la revendication 12.
